(19) Europäisches Patentamt
European Patent Office
Office européen des brevets

(11) **EP 0 517 649 B1**

(12) **EUROPÄISCHE PATENTSCHRIFT**

(45) Veröffentlichungstag und Bekanntmachung des Hinweises auf die Patenterteilung:
**27.03.1996  Patentblatt 1996/13**

(51) Int. Cl.$^6$: **C02F 3/06**, C02F 3/20, B01D 24/48

(21) Anmeldenummer: **92810346.4**

(22) Anmeldetag: **11.05.1992**

(54) **Festbettreaktor zum biologischen Abwasserreinigen**

Fixed bed reactor for biological waste water treatment

Réacteur à lit fixe pour le traitement biologique d'eau usée

(84) Benannte Vertragsstaaten:
**AT CH DE ES FR GB IT LI SE**

(30) Priorität: **07.06.1991 CH 1699/91**

(43) Veröffentlichungstag der Anmeldung:
**09.12.1992  Patentblatt 1992/50**

(73) Patentinhaber: **Sulzer Chemtech AG**
**CH-8404 Winterthur (CH)**

(72) Erfinder:
• **Tylmann, Josef**
**CH-8400 Winterthur (CH)**

• **Pamperl, Peter**
**CH-8405 Winterthur (CH)**

(74) Vertreter: **Hammer, Bruno, Dr.**
**c/o Sulzer Management AG**
**KS/Patente/0007**
**CH-8401 Winterthur (CH)**

(56) Entgegenhaltungen:
**EP-A- 0 250 316**       **DE-A- 3 321 436**
**DE-B- 1 216 247**       **FR-A- 2 596 385**

## Beschreibung

Die Erfindung betrifft einen Festbettreaktor zum biologischen Abwasserreinigen gemäss Oberbegriff von Anspruch 1.

Es sind Anlagen zum Filtrieren und biologischen Reinigen von Abwässern bekannt, die ein überflutetes und belüftetes Festbett aufweisen und bei denen das Rohwasser im Gegenstrom zur eingetragenen Luft fliesst (siehe z.B. M.Payraudeau, J.-Y.Bontonou "Traitement biologique a basse température selon un procédé de filtration biologique aérée: le BIOCARBONE", Les Eaux Usées Diluées, 1990, p.395). Die Belüftungsdüsen befinden sich beim Verfahren "Biocarbone" rund 30 cm über dem Zwischenboden, innerhalb des Festbetts angeordnet. Der eingetragene Sauerstoff und die biologisch abbaubaren Inhaltsstoffe des Rohwassers führen zu einer Vermehrung der Mikroorganismen, welche die Oberflächen der Füllkörper besiedeln. Periodisch muss ein Teil der wachsenden Biomasse entfernt werden. Dies geschieht mit einem Luft/Wasser-Gemisch, das mittels der Bodendüsen des Zwischenbodens durch das Festbett getrieben wird. Zusammen mit der Biomasse werden dabei auch Partikel entfernt, die sich aus dem Rohwasser im Festbett abgesetzt haben.

Es ist aus der DE-OS 33 21 436 eine Anlage der oben beschriebenen Art bekannt, bei welcher der Zwischenboden Öffnungen für die Belüftung aufweist; Belüftungsdüsen besonderer Bauart sorgen für einen Sauerstoffeintrag, der hinsichtlich variablem Verstopfungsgrad des Festbetts ziemlich unempfindlich ist. Die Luftzufuhr kann dabei über ein Luftpolster unter dem Zwischenboden erfolgen, das nur wenige Zentimeter hoch ist. In der FR-PS 2 596 385 wird eine Bodendüse vorgeschlagen, die im wesentlichen von bekannter Bauart ist, bei der eine Belüftungsdüse in Form eines kleinen Loches integriert ist. Bei dieser einfachen und sehr zweckmässig erscheinenden Bodendüse tritt - wie die Erfahrung gezeigt hat - allerdings ein Stabilitätsproblem auf, das die Verwendung solcher Bodendüsen verunmöglicht. Eine Erläuterung dieses Problems folgt weiter unten im Zusammenhang mit den Figuren.

Es ist Aufgabe der Erfindung, einen Festbettreaktor zu schaffen, dessen Bodendüsen zumindest teilweise integrierte Belüftungsdüsen aufweisen, wobei der Betrieb mit gleichmässigem Lufteintrag möglich ist, wobei also das erwähnte Stabilitätsproblem nicht auftritt. Diese Aufgabe wird durch Bodendüsen gelöst, die durch den zweiten Teil des Anspruchs 1 gekennzeichnet sind. Die abhängigen Ansprüche betreffen vorteilhafte Ausführungsformen des erfindungsgemässen Festbettreaktors.

Das Festbett des erfindungsgemässen Reaktors kann aus einer Schüttung oder aus einer geordneten Packung von Füllkörpern bestehen, beispielsweise aus Raschigringen oder aus Elementen für statische Mischer. Die Oberflächen der Füllkörper können mit Mikroorganismen bewachsen sein; es ist aber auch möglich, dass sie mit Katalysatoren, welche die biochemischen Prozesse bewirken, beschichtet sind. Mittels der Belüftungsdüsen kann verdichtete Umgebungsluft oder beispielsweise auch mit Sauerstoff angereicherte Luft dem Festbett zugeführt werden.

Die Erfindung wird im folgenden anhand der Figuren erläutert. Es zeigen:

Fig. 1a      die schematische Darstellung zweier benachbart angeordneter Bodendüsen mit integrierten Belüftungsdüsen, für die ein gleichmässiger Gaseintrag in das Festbett nicht möglich ist,

Fig. 1b      ein Diagramm, das den statischen Druck p in den beiden Bodendüsen der Fig.1a darstellt,

Fig. 2      Bodendüsen mit integrierten Belüftungsdüsen eines erfindungsgemässen Festbettreaktors,

Fig. 3      ein zweites Ausführungsbeispiel einer Bodendüse,

Fig. 4      ein drittes Ausführungsbeispiel einer Bodendüse, bei der die Belüftungsdüse als separates Teil ausgeführt ist,

Fig. 5      ein Drosselelement für die Bodendüse und

Fig. 6      einen Vertikalschnitt durch einen Teil eines erfindungsgemässen Festbettreaktors.

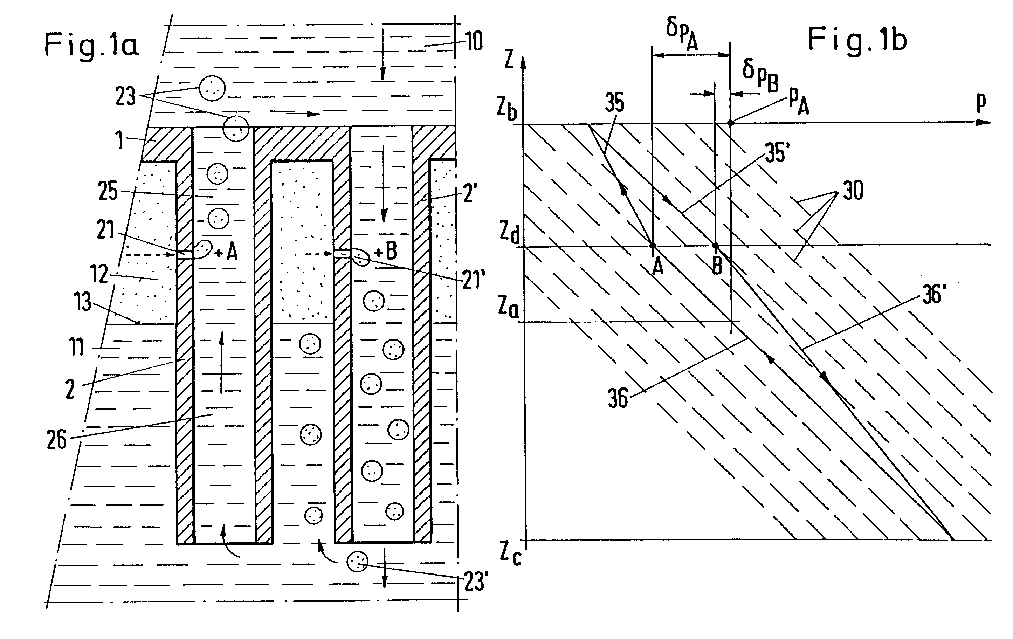

Anhand der Figuren 1a und 1b wird ein "Gedankenexperiment" mit dem Ziel durchgeführt, das erwähnte Stabilitätsproblem bei der Belüftung über die Bodendüsen zu verstehen. In Fig.1a ist der Zwischenboden 1 ausschnittsweise mit zwei rohrförmigen Bodendüsen 2 und 2′ gezeigt. Im Raum 10 über dem Zwischenboden befindet sich das geflutete Festbett, das aber nicht dargestellt ist. Unter dem Zwischenboden 1 befinden sich der flüssigkeitsgefüllte Raum 11 und das Luftpolster 12.

Für die Diskussion der Druckverhältnisse wird eine z-Achse in Längsrichtung der Bodendüse 2 eingeführt. Die Bodendüse 2 erstreckt sich zwischen $z = z_b$ und $z = z_c$ (siehe Fig.1b). Der Flüssigkeitsspiegel 13 unterhalb des Luftpolsters 12 liegt auf der Höhe $z = z_a$. Auf der Höhe $z = z_d$ weist die Bodendüse 2 eine Bohrung 21 auf, die als Belüftungsdüse vorgesehen ist. (Bohrungen für die Spülluft sind für die folgenden Überlegungen unerheblich und werden daher ignoriert.) Im Diagramm der Fig.1b ist der statische Druck p als Funktion von der z-Koordinate dargestellt. Die gestrichelt gezeichnete Kurvenschar 30 gibt den Verlauf von p in der ungestörten Flüssigkeit an. Durch den Eintrag von Gasblasen in den Bodendüsen 2 und 2′ vermindert sich die effektive Dichte der Flüssigkeit und damit erhält der Druckverlauf eine andere Steigung. Der Punkt A im Diagramm gibt den Druck an, der in der flüssigkeitsgefüllten Bodendüse 2 auf der Höhe der Belüftungsdüse 21 - ebenfalls mit A bezeichnet - vorliegt. Entsprechendes gilt für den Punkt B und die zweite Bodendüse 2'. Das Kurvenstück 35 gibt den Druckverlauf im oberen Teil 25 der Bodendüse 2 an, in welchem Gasblasen aufsteigen. Im unteren Teil 26 ist der Druckverlauf durch das Kurvenstück 36 gegeben.

Der Druck im Luftpolster 12 beträgt $p_A$. Die Druckdifferenz $\delta p_A$ (siehe Fig.1b) ist die treibende Kraft für den Gastransport durch die Belüftungsdüse 21.

Nach dem Passieren des Festbetts soll die Flüssigkeit durch die Bodendüsen im Gegenstrom zu den eingetragenen Gasblasen 23 nach unten abströmen. Bei geringem Gegenstrom kann der Gaseintrag (punktiert gezeichnete Pfeile in Fig.1a) über alle Bodendüsen 2 gleichmässig erfolgen. Wird der Gegenstrom stetig erhöht, so stellt sich eine instabile Situation ein, bei der ein Umklappen des Strömungsbildes eintritt: In einem Teil der Bodendüsen 2 versiegt der Gegenstrom; es wird im Gegenteil durch die Gasblasen 23 Flüssigkeit nach oben gefördert. In den übrigen Bodendüsen - nämlich in benachbarten Bodendüsen 2' - verstärkt sich die Strömungsgeschwindigkeit der abfliessenden Flüssigkeit beträchtlich und zwar so stark, dass die Gasblasen 23', die weiterhin über die Bohrung 21' eingetragen werden, nach unten mitverfrachtet werden. (Die ausgezogen gezeichneten Pfeile deuten die strömende Flüssigkeit an.) Wegen der verminderten effektiven Dichte verläuft im unteren Teil der Bodendüsen 2' der Druckverlauf gemäss Kurvenstück 36' und im oberen Teil, der frei von Gasblasen ist, gemäss Kurvenstück 35'. Die treibende Kraft für den Gastransport durch die Belüftungsdüse 21' hat sich auf die Druckdifferenz $\delta p_B$ (siehe Fig.1b) reduziert und somit findet dort ein gedrosselter Gasstrom statt.

Bei diesen Erläuterungen des Stabilitätsproblems sind vereinfachende Annahmen gemacht worden (nämlich Vernachlässigung von Druckverlusten aufgrund der strömenden Flüssigkeit; Ignorierung der Spülluftöffnungen in den Bodendüsen). Eine präzisere Analyse dieses Problems würde aber am qualitativen Sachverhalt - wie die empirischen Befunde erwarten lassen - nichts ändern.

Aufgrund des Verständnisses des Stabilitätsproblems ist es nun klar, dass eine gleichmässige Belüftung des Festbetts nur möglich ist, wenn die eingetragenen Gasblasen durch die gegenströmende Flüssigkeit nicht nach unten mitverfrachtet werden können. Mit anderen Worten, durch die Strömung des Ablaufwassers dürfen die Gasblasen nicht am Aufsteigen gehindert werden. Die Bedingung dafür, dass diese Forderung erfüllt ist, kann folgendermassen ausgedrückt werden: Im gesamten Einströmbereich jeder Bodendüse 2 muss der offene Querschnitt oberhalb der Belüftungsdüsen 21 so bemessen sein, dass die Geschwindigkeit der sich im Gegenstrom bewegenden Flüssigkeit kleiner als die Steiggeschwindigkeit der Gasblasen 23 ist.

Beim erwähnten "offenen Querschnitt" müssen unter Umständen auch zusätzliche Einbauten (beispielsweise Düsenköpfe) oder der Aufbau des Festbetts berücksichtigt werden. Die Steiggeschwindigkeit der Gasblasen 23, die vom Blasendurchmesser abhängt, kann rechnerisch abgeschätzt werden (beispielsweise mittels der aus Lehrbüchern bekannten Widerstandsformel nach Stokes), oder sie kann selbstverständlich auch experimentell bestimmt werden. Bei der Dimensionierung der Bodendüse ist darauf zu achten, dass auch die Gasblasen einen Teil der Querschnittsfläche beanspruchen. Ferner ist zu beachten, dass bei grösserem Gegenstrom die Dichte der Gasblasen im kritischen Bereich ebenfalls grösser und somit auch der durch die Blasen beanspruchte Querschnitt grösser ist. Es kann zweckmässig sein, für eine grobe Dimensionierung der Bodendüsen folgende "Faustregel" anzuwenden: Der Querschnitt der Bodendüsen soll so gross sein, dass bei fehlendem Lufteintrag die Geschwindigkeit des abfliessenden Wassers wesentlich kleiner - also rund um einen Faktor 10 kleiner - als die mittlere Steiggeschwindigkeit der Gasblasen ist. Durch detailliertere Berechnungen oder durch Experimente können allerdings Ergebnisse entstehen, die sich beträchtlich von jenen aufgrund der Faustregel erhaltenen unterscheiden.

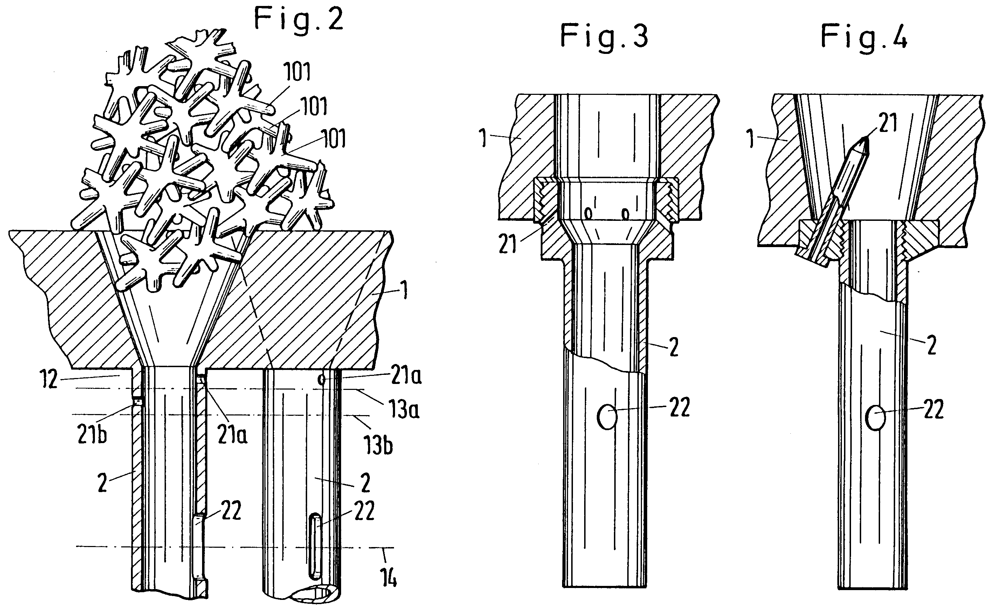

Fig.2 zeigt ein erstes Ausführungsbeispiel der Bodendüse 2 des erfindungsgemässen Festbettreaktors. Das auf dem Zwischenboden 1 aufliegende Festbett, das ausschnittsweise dargestellt ist, besteht aus einer Schüttung von Füllkörpern 101. Die Bodendüse 2 weist zwei Belüftungsdüsen 21a und 21b auf, die auf verschiedenen Höhen angeordnet sind. Liegt der Wasserspiegel unterhalb des Luftpolsters 12 auf der strichpunktierten Linie 13a, so erfolgt die Belüftung nur über die obere Öffnung 21a. Wird der Druck im Luftpolster 12 erhöht, so bewegt sich einerseits der Wasserspiegel abwärts und andererseits verstärkt sich der Lufteintrag durch die obere Belüftungsdüse 21a. Fällt der Wasserspiegel weiter bis unter die zweite Belüftungsdüse 21b (Linie 13b), so wird zusätzlich auch über diese Düse 21b Luft ins Festbett eingetragen. Über die schlitzförmige Öffnung 22 wird die Spülluft für das Rückspülen des Festbettes eingetragen. Der Wasserspiegel befindet sich dabei beispielsweise auf der Höhe der strichpunktierten Linie 14.

Besteht das Festbett aus einer Schüttung, so können die Füllkörper 101 in den Mündungsbereich der Bodendüse 5 gelangen, wie dies in Fig.2 angedeutet ist. Dadurch kann der offene Querschnitt im Einströmbereich so stark eingeengt werden, dass dort der Gegenstrom von Wasser und Gasblasen nicht gewährleistet ist. Mittels beispielsweise Gitter, die über den Bodendüsen 5 angeordnet sind und welche die Füllkörper 101 aus dem Mündungsbereich fernhalten, kann dieses Problem umgangen werden.

Das Festbett wirkt im allgemeinen wie ein statischer Mischer, der für eine Verteilung der Gasblasen im Reaktor sorgt. Eine solche Verteilung ergibt sich besonders gut, wenn das Festbett aus einer Packung von statischen Mischelementen - zumindest im Bodenbereich - besteht.

Die in Fig.3 gezeigte Bodendüse 5 weist einen Kranz von Belüftungsdüsen 21 auf, die sich auf gleicher Höhe befinden. Der Durchmesser der Bodendüse 5 ist oben grösser als unten, und zwar so, dass oberhalb der Belüftungsdüsen 21 der Gegenstrom von Wasser und Gasblasen möglich ist. Die Bodendüse 5 ist auf der Unterseite des Zwischenbodens lösbar befestigt. Dadurch lassen sich die Bodendüsen 5 im Bedarfsfalle weit besser austauschen, als dies bei den heute üblichen Düsenböden möglich ist; denn vor dem Austausch ist es nicht nötig, das Festbett zu entfernen.

Fig.4 stellt eine Bodendüse 5 mit separater integrierter Belüftungsdüse 21 dar. Diese Belüftungsdüse 21 ist austauschbar und zu Reinigungszwecken von unten gut zugänglich. Es sind beispielsweise auch separate Belüftungsdüsen denkbar, die jeweils aus einem Rohr mit seitlichen Düsenöffnungen bestehen.

Bei den in den Figuren dargestellten Ausführungsbeispielen werden die Belüftungsdüsen 21 aus dem Luftpolster 12 unterhalb des Zwischenbodens (siehe Fig.2) gespiesen. Es ist aber auch möglich, die Belüftungsdüsen an ein System von Speiseleitungen anzuschliessen. Dies ist dann vorteilhaft, wenn die Belüftung mit Sauerstoff oder mit sauerstoffangereicherter Luft vorgenommen wird.

Je nach Sauerstoffbedarf kann es vorteilhaft sein, neben den Bodendüsen mit integrierten Belüftungsdüsen zusätzlich noch separate Belüftungsdüsen im Zwischenboden vorzusehen. Umgekehrt kann es aber auch aus Kostengründen vorteilhaft sein, wenn nicht alle Bodendüsen integrierte Belüftungsdüsen aufweisen.

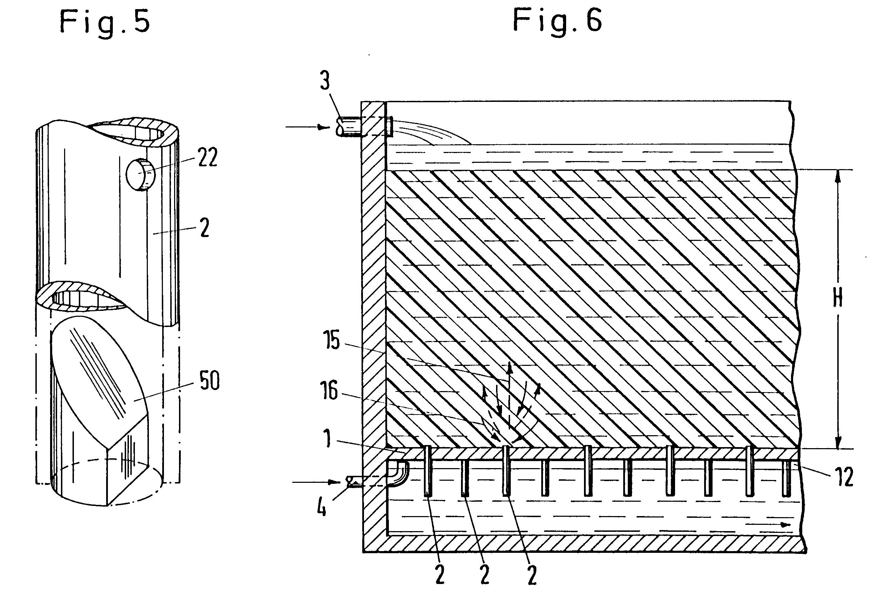

Die heute gebräuchlichen Bodendüsen weisen Düsenköpfe mit spaltförmigen Öffnungen auf. Diese Düsenköpfe, die einerseits dem Rückhalten von granularem Festbettmaterial dienen, wirken andererseits als Drosselelemente und sorgen durch die Drosselung des abströmenden Wassers für einen über den gesamten Reaktor gleichmässigen Abfluss. Beim erfindungsgemässen Festbettreaktor müssen auf solche Düsenköpfe verzichtet werden, da sonst das Aufsteigen der Gasblasen behindert würde. Für die nötige Drosselung müssen Mittel in der Bodendüse unterhalb der integrierten Belüftungsdüse vorgesehen werden. Ein Ausführungsbeispiel für ein solches Drosselelement ist in Fig. 5 dargestellt: Das Drosselelemtent 50 verengt den Querschnitt am untern Ende der Bodendüse 2.

Abschliessend soll noch kurz ein Ausführungsbeispiel für den erfindungsgemässen Festbettreaktor (Fig.6) gegeben werden: Der Reaktor mit einer Grundfläche von 40 m² weist ein Festbett mit der Höhe H = 7m und einer spezifischen Oberfläche von 250 m²/m³ auf. Der mittlere Abwasseranfall (Zulaufleitung 3) beträgt rund 10'000 m³/d und somit ist die nach unten gerichtet Wassergeschwindigkeit im Mittel rund 10 m/h. Die Belüftungsmenge (Einspeiseleitung 4), die geregelt wird, beträgt im Maximum rund 20'000 Nm³/d. (In Fig.6 sind für eine Bodendüse 2 die eingetragene Luft durch gestrichelte Pfeile 15 und das im Gegenstrom fliessende Wasser durch ausgezogene Pfeile 16 angedeutet.) Der Zwischenboden 1 wird aus vorfabrizierten Düsenplatten aus Beton hergestellt, wobei 64 rohrförmige Düsen pro Quadratmeter vorgesehen sind. Das Spülen des Festbetts wird mittels eines Luft/Wasser-Gemisches durchgeführt, wobei die Spülwassergeschwindigkeit im Festbett 55 m/h und die Spülluftgeschwindigkeit 60 m/h betragen.

Bei der Belüftung des Festbetts, die erfindungsgemäss über das Luftpolster 12 erfolgt, das nur wenige Zentimeter hoch ist, werden Gasblasen mit einer mittleren Steiggeschwindigkeit von rund 20 cm/s in die Bodendüsen 2 eingetragen. Der Durchmesser der Bodendüsen 2 soll - gemäss der oben angegebenen "Faustregel" und mit dem dort angebrachten Vorbehalt - so bemessen sein, dass bei fehlendem Lufteintrag die Strömungsgeschwindigkeit des durch die Düse abfliessenden Wassers (ca. 0.044 l/s) wesentlich kleiner als 20 cm/s - also kleiner als rund 2 cm/s - ist. Hieraus folgt, dass die Bodendüsen einen Durchmesser von rund 5 bis 5,5 cm aufweisen sollen.

## Patentansprüche

1. Festbettreaktor zum biologischen Abwasserreinigen, mit Zulauf (3) des Abwassers oberhalb des Festbetts, mit einem Bodendüsen (2) tragenden Zwischenboden (1), wobei die Bodendüsen für den Ablauf des behandelten Wassers und ein periodisch vorgenommenes Rückspülen des Festbetts vorgesehen sind, und mit Belüftungsdüsen (21), die in die Bodendüsen (2) integriert sind und deren Austrittsöffnungen im oberen Bereich der Bodendüsen angeordnet sind,

   dadurch gekennzeichnet, dass mit den Belüftungsdüsen (21) Gasblasen (23) direkt in das Festbett eintragbar sind und die Bodendüsen (2) jeweils keine die Gasblasen aufhaltenden Elemente, insbesondere keinen Filterkopf, aufweisen und dass - bezüglich einer vorgegebenen maximalen Abwassermenge und einem vorgegebenen Gaseintrag - für jede Bodendüse oberhalb den Belüftungsdüsen (21) der Strömungsquerschnitt des Ablaufwassers im gesamten Einströmbereich ausreichend gross bemessen ist, so dass die Gasblasen im Gegenstrom zum Ablaufwasser aufsteigen können, wobei die Bemessung empirisch und/oder aufgrund von Berechnungen durchgeführt ist.

2. Festbettreaktor nach Anspruch 1, dadurch gekennzeichnet, dass die Belüftungsdüsen (21) aus einem Luftpolster (12) unterhalb des Zwischenbodens (1) gespiesen werden.

3. Festbettreaktor nach Anspruch 1 oder 2, dadurch gekennzeichnet, dass das Festbett zumindest teilweise eine geordnete Packung von statischen Mischerelementen ist, mittels derer eine Verteilung der aufsteigenden Gasblasen (23) erfolgt.

4. Festbettreaktor nach einem der Ansprüche 1 bis 3, dadurch gekennzeichnet, dass die Bodendüse (2) im wesentlichen ein Rohr ist, mit mindestens einer seitlichen Bohrung unterhalb des Zwischenbodens (1), die als Belüftungsdüse (21) dient, und mit mindestens einer seitlichen Öffnung (22) im mittleren Bereich, über welche die Spülluft in das Festbett einspeisbar ist.

5. Festbettreaktor nach einem der Ansprüche 1 bis 4, dadurch gekennzeichnet, dass die Belüftungsdüsen (21) austauschbare Teile sind.

6. Festbettreaktor nach einem der Ansprüche 1 bis 5, dadurch gekennzeichnet, dass die Bodendüse (2) am Zwischenboden (1) unten lösbar befestigbar ist.

7. Festbettreaktor nach Anspruch 2, dadurch gekennzeichnet, dass in den Bodendüsen (2) mindestens zwei Belüftungsdüsen (21a, 21b) integriert sind, deren Lufteintrittsstellen auf verschiedenen Höhen angeordnet sind.

8. Festbettreaktor nach einem der Ansprüche 1 bis 7, dadurch gekennzeichnet, dass im Zwischenboden (1) Bodendüse (2) mit und solche ohne integrierten Belüftungsdüsen (21) angeordnet sind.

9. Festbettreaktor nach einem der Ansprüche 1 bis 7, dadurch gekennzeichnet, dass im Zwischenboden (1) Bodendüse (2) mit integrierten Belüftungsdüsen (21) und separate Belüftungsdüsen (21) angeordnet sind.

10. Festbettreaktor nach einem der Ansprüche 1 bis 9, dadurch gekennzeichnet, dass jede Bodendüse (2) mit integrierter Belüftungsdüse (21) unterhalb der Belüftungsdüse (21) ein Drosselelement (50) aufweist.

## Claims

1. A solid-bed reactor for biological sewage treatment, having intake (3) of the sewage above the solid bed, having an intermediate floor (1) bearing floor jets (2), the floor jets being provided for discharge of the treated water and periodic backwashing of the solid bed being provided, and having aeration orifices (21) which are integrated into the floor jets (2) and the outlet openings of which are disposed in the top zone of the floor jets, characterised in that gas bubbles (23) are directly introducible into the solid bed by means of the aeration orifices (21) and none of the floor jets (2) has any elements restraining the gas bubbles, more particularly a filter head, and in that with respect to a predetermined maximum amount of sewage and a predetermined gas intake - for each floor jet above the aeration orifices (21) the flow cross-section of the outgoing water in the entire intake region is sufficiently large for the gas bubbles to be able to ascend in countercurrent to the outgoing water, the dimensioning being carried out empirically and/or on the basis of calculations.

2. A solid-bed reactor as claimed in claim 1, characterised in that the aeration orifices (21) are supplied from an air cushion (12) below the intermediate floor (1).

3. A solid-bed reactor as claimed in claim 1 or 2, characterised in that the solid bed is at least in part a regular packing of static mixer elements, by means of which the rising gas bubbles (23) are distributed.

4. A solid-bed reactor as claimed in any of claims 1 to 3, characterised in that the floor jet (2) is essentially a tube, having below the intermediate floor (1) at least one lateral bore which serves as an aeration orifice (21), and having in the central area at least one lateral aperture (22) through which the washing air can be fed into the solid bed.

5. A solid-bed reactor as claimed in any of claims 1 to 4, characterised in that the aeration orifices (21) are exchangeable parts.

6. A solid-bed reactor as claimed in any of claims 1 to 5, characterised in that the floor jet (2) can be attached releasably to the underside of the intermediate floor (1).

7. A solid-bed reactor as claimed in claim 2, characterised in that there are integrated in the floor jets (2) at least two aeration orifices (21a, 21b), for which the air entry points are disposed at different levels.

8. A solid-bed reactor as claimed in any of claims 1 to 7, characterised in that in the intermediate floor (1) there are floor jets (2) with and without integrated aeration orifices (21).

9. A solid-bed reactor as claimed in any of claims 1 to 7, characterised in that in the intermediate floor (1) there are floor jets (2) with integrated aeration orifices (21) and separate aeration orifices (21).

10. A solid-bed reactor as claimed in any of claims 1 to 9, characterised in that each floor jet (2) with an integrated aeration orifice (21) has a flow restrictor (5∅) below the aeration orifice (21).

## Revendications

1. Réacteur à lit fixe pour l'épuration biologique des eaux usées, avec arrivée (3) des eaux usées au-dessus du lit fixe, avec un fond intermédiaire (1) portant des buses de fond (2), les buses de fond étant prévues pour l'évacuation de l'eau traitée et un lavage à contre-courant, entrepris périodiquement, du lit fixe, et avec des buses d'aération (21), qui sont intégrées dans les buses de fond (2) et dont les orifices de sortie se situent dans la zone supérieure des buses de fond, caractérisé en ce qu'avec les buses d'aération (21) des bulles de gaz (23) peuvent être directement introduites dans le lit fixe et les buses de fond (2) ne présentent pas chacune des éléments retenant les bulles de gaz, en particulier pas de tête de filtre, et en ce que - par rapport à une quantité d'eau usée maximale donnée et un apport de gaz donné - pour chaque buse de fond au-dessus des buses d'aération (21), la section transversale d'écoulement de l'eau évacuée a des dimensions suffisamment grandes dans toute la région d'admission, de sorte que les bulles de gaz peuvent monter à contre-courant par rapport à l'eau évacuée, le dimensionnement étant effectué empiriquement et/ou à partir de calculs.

2. Réacteur à lit fixe selon la revendication 1, caractérisé en ce que les buses d'aération (21) sont alimentées à partir d'un coussin d'air (12), au-dessus du fond intermédiaire (1).

3. Réacteur à lit fixe selon la revendication 1 ou 2, caractérisé en ce que le lit fixe est au moins en partie un paquet ordonné d'éléments statiques de mélangeur, au moyen desquels se produit une distribution des bulles de gaz (23) ascendantes.

4. Réacteur à lit fixe selon l'une des revendications 1 à 3, caractérisé en ce que la buse de fond (2) est essentiellement un tube avec au moins un perçage latéral au-dessous du fond intermédiaire (1), qui sert de buse d'aération (21), et avec au moins un orifice latéral (22) dans la zone centrale, par laquelle l'air de lavage peut être introduit dans le lit fixe.

5. Réacteur à lit fixe selon l'une des revendications 1 à 4, caractérisé en ce que les buses d'aération (21) sont des éléments interchangeables.

6. Réacteur à lit fixe selon l'une des revendications 1 à 5, caractérisé en ce que la buse de fond (2) peut être fixée de manière amovible à la partie inférieure du fond intermédiaire (1).

7. Réacteur à lit fixe selon la revendication 2, caractérisé en ce que dans les buses de fond (2) sont intégrées au moins deux buses d'aération (21a, 21b), dont les points d'entrée d'air se situent à différentes hauteurs.

8. Réacteur à lit fixe selon l'une des revendications 1 à 7, caractérisé en ce que dans le fond intermédiaire (1) sont placées des buses de fond (2) avec des buses d'aération (21) intégrées, et d'autres sans buses d'aération (21) intégrées.

9. Réacteur à lit fixe selon l'une des revendications 1 à 7, caractérisé en ce que dans le fond intermédiaire (1) sont prévues des buses de fond (2) avec buses d'aération intégrées (21) et des buses d'aération séparées (21).

10. Réacteur à lit fixe selon l'une des revendications 1 à 9, caractérisé en ce que chaque buse de fond (2) avec buse d'aération (21) intégrée comporte un élément d'étranglement (50) au-dessous de la buse d'aération (21).

Fig. 1b

Fig. 1a

7

Fig.4

Fig.3

Fig.2

Fig. 5

Fig. 6

EP 0 517 649 B1